Europäisches Patentamt

European Patent Office

Office européen des brevets

(19)

(11) Publication number: **0 010 343**
**B1**

(12) **EUROPEAN PATENT SPECIFICATION**

(45) Date of publication of patent specification: **14.09.83**

(51) Int. Cl.³: **B 60 P 7/13, B 65 B 25/20**

(21) Application number: **79300964.8**

(22) Date of filing: **29.05.79**

(54) **Cargo container with fastening device.**

(30) Priority: **31.05.78 GB 2539578**

(43) Date of publication of application:
**30.04.80 Bulletin 80/9**

(45) Publication of the grant of the patent:
**14.09.83 Bulletin 83/37**

(84) Designated Contracting States:
**DE FR GB NL SE**

(56) References cited:
**AT - B - 71 003**
**DE - A - 2 236 391**
**DE - A - 2 716 337**
**GB - A - 1 232 536**
**GB - A - 1 285 869**
**US - A - 2 137 255**
**US - A - 3 080 096**
**US - A - 3 972 500**

(73) Proprietor: **WHIRLY BIRD SERVICES LIMITED**
**Foucausie**
**Grandhome Aberdeen (GB)**

(72) Inventor: **Pidcock, Frederick**
**Kirkhill**
**Old Meldrum Aberdeenshire (GB)**

(74) Representative: **Wotherspoon, Graham et al,**
**FITZPATRICKS 48 St. Vincent Street**
**Glasgow G2 5TT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

Cargo container with fastening device.

The invention relates to cargo-carrying containers designed to be stowed securely e.g. in helicopters.

A cargo-carrying container has been proposed in US—A—2 137 255 primarily intended to be carried on railway freight cars. The container has two opposite end walls, each end wall having thereon means for attachment to a flexible tension member whereby the container can be secured to a floor of a cargo storage space. Specifically each end wall has two rings or bails and the containers are supported in a line along the length of the car with the rings or bails on adjacent end walls interconnected by short links and the rings or bails on the end walls at both ends of the line interconnected by guys with rings on the opposite ends of the car floor.

The object of the invention is to provide a cargo-carrying container which can either be secured to and rest on a floor of a cargo storage space or be secured to and rest on a similar underlying container which may itself be secured to and rest on the floor.

The invention is characterised in that the means for attachment to a flexible tension member comprises an eye bolt the shank of which passes through a hole in and fastened to the end wall and a thickened reinforcement of the wall, the eye bolt having an enlarged head at its outer end retaining a slotted plate swivellable about the shank of the eye bolt and, the enlarged head also having an opening extending transversely therethrough retaining a ring, the slotted plate serving to secure one end of a strap, the effective length of which can be adjusted, and the other end of the strap carrying a hook whereby the container can be secured either to a floor of a cargo-carrying space by engaging the hook with a ring mounted in the floor or to an underlying similar container by engaging the hook with the ring of the similar container.

An embodiment of the invention will now be described by way of an example with reference to the accompanying drawings, in which:

Fig. 1 is an oblique view of a container according to the invention and showing the container resting on and secured to both a floor of a cargo storage space and a similar underlying container; and

Fig. 2 is an enlarged sectional view of the mounting tension member on an end wall of the container.

A container 1 has a bottom wall, a front wall 2, a rear wall and end walls 3 and a closeable top 4 which is hinged to the rear wall and fastened by releasable clasps 5 on the front wall 2. On each end wall 3 is mounted a flexible tension member 6 in the form of a strap having one end secured to a slotted plate 7 which can swivel about a spacing bush 8. A threaded shank 9 portion of an eye bolt 10 extends through a washer 11, the bush 8, a fixed plate 12, the end wall 3, a timber block 13, a channel member 14 and washer 15 and threadedly receives a nut 16. A ring 17 is retained in a transverse opening through the head of the eye bolt 10. The strap includes a buckle 18 with a releasable jamming lever whereby the effective length of the strap can be adjusted. The free end of the strap carries a hook 19 with a springloaded latch.

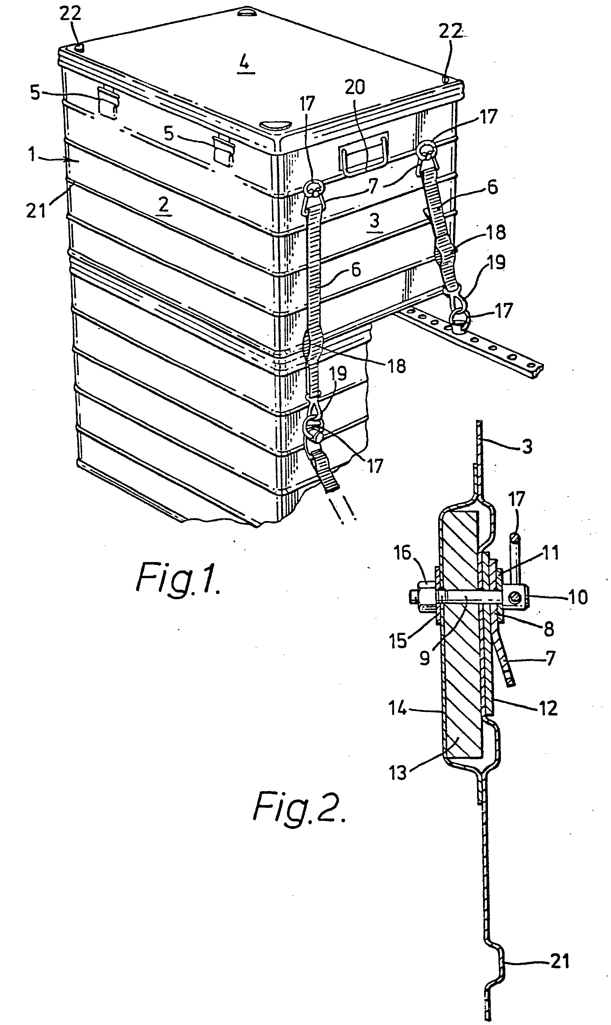

In use the container 1 may as shown on the right hand side of Fig. 1, rest on and be secured to the floor of a cargo storage space with the hooks 19 secured to rings 17 retained in eye bolts 10 mounted on the floor and the tension members 6 tightened. It is also possible as shown on the left hand side of Fig. 1 to stack two containers and secure them together, in which case the hooks 19 of the top container are secured to the rings 17 retained in the eye bolts 10 of the bottom container. It is also possible to stack more than two containers.

When the tension members 6 are not in use the tension members 6 and the plates 7 may be swivelled about the bushes 8 so that the tension members 6 may be disposed out of the way with the hooks 19 engaged with each other or engaged with rings mounted on the front and/or rear wall of the container.

The containers are particularly designed for use in helicopters and to be easily manhandled, handles 20 being provided on the end walls 3.

The containers are made of sheet aluminium alloy with pressed ribs 21 and the corners of the top 4 are reinforced as at 22. The channel member 14 is also made of sheet aluminium alloy and is conveniently secured to the inside of the end walls 3 by pop rivets.

As shown in Fig. 1 two tension members 6 are fitted to each end wall 3. However, one tension member 6 could instead be fitted to each end wall 3 centrally under the handle 20.

**Claims**

1. A cargo-carrying container having two opposite end walls, each end wall having thereon means for attachment to a flexible tension member whereby the container can be secured to a floor of a cargo storage space, characterised in that the means comprises an eye bolt (10) the shank (9) of which passes through a hole in and fastened to the end wall (3) and a thickened reinforcement (13, 14) of the wall, the eye bolt having an enlarged head at its outer end retaining a slotted plate (7) swivellable about the shank of the eye bolt and, the enlarged head also having an opening extending transversely therethrough retaining a ring (17), the slotted plate serving to secure one end of a strap (6), the effective length of which can be adjusted, and the other end of the strap carrying a hook (19), whereby the container can be secured either to a floor of a cargo-carrying space by engaging the hook with a ring mounted in the floor or to an underlying similar container by engaging the hook with the ring of the similar container.

2. A cargo-carrying container according to claim 1, characterised in that the end wall (3) is made of sheet aluminium alloy and the reinforcement comprises a timber block (13) sandwiched between the end wall and a channel member (14) of sheet aluminium alloy secured to the inside of the end wall.

## Patentansprüche

1. Frachtbehälter mit zwei gegenüberliegenden Endwänden, die jeweils mit Mitteln zur Verbindung mit einem flexiblen Spannglied versehen sind, das der Sicherung des Behälters auf einem Boden eines Frachtspeicherraumes dient, dadurch gekennzeichnet, daß das Mittel einen Ösenbolzen (10) aufweist, dessen Schaft (9) durch ein Loch in der Endwand (3) und einer verdickten Wandverstärkung (13, 14) hindurchragt und befestigt ist, daß der Ösenbolzen an seinem äußeren Ende einen vergrößerten Kopf hat, der eine um den Schaft des Ösenbolzens drehbare, geschlitzte Platte (7) festhält und der von einer querverlaufenden Öffnung durchsetzt ist, die einen Ring (17) hält und daß an der geschlitzten Platte ein Ende eines Gurtes (6) befestigt ist, dessen wirksame Länge einstellbar ist und dessen anderes Ende einen Haken (19) trägt, so daß der Behälter entweder an einem Boden eines Frachtraumes durch Einhängen des Hakens in einen im Boden vorgesehenen Ring oder an einem unteren ähnlichen Behälter durch Einhängen des Hakens in den Ring des ähnlichen Behälters befestigbar ist.

2. Frachtbehälter nach Anspruch 1, dadurch gekennzeichnet, daß die Endwand (3) aus Aluminiumlegierungsblech hergestellt ist und daß die Verstärkung einen Holzblock (13) aufweist, der zwischen der Endwand und einem an der Innenseite der Endwand befestigten U-Profilteil (14) aus Aluminiumlegierungsblech eingeschlossen ist.

## Revendications

1. Conteneur pour cargaison comprenant deux parois d'extrémité opposées comportant chacune des moyens de fixation à un élément de tension flexible, de manière que le conteneur puisse être fixé au plancher d'un lieu de stockage de cargaison, caractérisé en ce que lesdits moyens comprennent une goupille (10) dont la tige (9) passe dans une ouverture de la paroi d'extrémité (3) à laquelle elle est fixée, et dans un renfort épaissi (13, 14) de la paroi, la goupille présentant à son extrémité extérieure une tête élargie qui retient une plaque à encoche (7) pouvant pivoter autour de la tige de la goupille et, la tête élargie présentant également une ouverture transversale traversante retenant un anneau (17), la plaque à encoche servant à fixer l'une des extrémités d'une sangle (6) dont la longueur effective est réglable, l'autre extrémité de la sangle supportant un crochet (10) de façon que le conteneur puisse être fixé soit sur le plancher d'un lieu de stockage de cargaison par engagement du crochet dans un anneau fixé au plancher, soit à un conteneur analogue sous-jacent par engagement du crochet dans l'anneau du conteneur sous-jacent.

2. Conteneur pour cargaison suivant la revendication 1, caractérisé en ce que la paroi d'extrémité (3) est en tôle d'alliage d'aluminium et en ce que le renfort comprend un bloc de bois (13) interposé entre la paroi d'extrémité et un profilé (14) en tôle d'alliage d'aluminium fixé à l'intérieur de la paroi d'extrémité.

**0 010 343**

Fig.1.

Fig.2.